**Europäisches Patentamt**

**European Patent Office**

**Office européen des brevets**

(19)

(11) Veröffentlichungsnummer: **0 192 644**
**B1**

(12) **EUROPÄISCHE PATENTSCHRIFT**

(45) Veröffentlichungstag der Patentschrift: **07.11.90**

(51) Int. Cl.⁵: **B 23 K 26/00**

(21) Anmeldenummer: **85903276.5**

(22) Anmeldetag: **05.07.85**

(86) Internationale Anmeldenummer:
**PCT/EP85/00328**

(87) Internationale Veröffentlichungsnummer:
**WO 86/00552 30.01.86 Gazette 86/03**

(54) **VERFAHREN ZUM BEARBEITEN VON WERKSTÜCKEN MITTELS LASERSTRAHL.**

(30) Priorität: **06.07.84 DE 3424825**

(43) Veröffentlichungstag der Anmeldung:
**03.09.86 Patentblatt 86/36**

(45) Bekanntmachung des Hinweises auf die
Patenterteilung:
**07.11.90 Patentblatt 90/45**

(84) Benannte Vertragsstaaten:
**AT CH DE FR GB IT LI**

(56) Entgegenhaltungen:
**CH-E-mi cal ab
DE-A-2 644 014**

**IBM Technical Disclosure Bulletin, Vol.25, No. 9,
February 1983; S. H. CHEN: "Apparatus for
removing insulating material on conductors",
pages 4796-4798, see pages 4697-4698**

(73) Patentinhaber: **HERZIGER, Gerd, B.
Fasanenweg 2
D-6101 Rossdorf 2 (DE)**

(72) Erfinder: **BEYER, Eckhard
Starkenburgring 23
D-6154 Alsbach 1 (DE)**
Erfinder: **LOOSEN, Peter
Dorfstrasse 25
D-5100 Aachen-Hahn (DE)**
Erfinder: **POPRAWE, Reinhart
Mainblick 6
D-6240 Königstein 2 (DE)**
Erfinder: **HERZIGER, Gerd, B.
Fasanenweg 2
D-6101 Rossdorf 2 (DE)**

(74) Vertreter: **Steinmann, Otto C. et al
Kanzlei Münich, Steinmann, Schiller
Willibaldstrasse 36
D-8000 München 21 (DE)**

EP 0 192 644 B1

Courier Press, Leamington Spa, England.

**Beschreibung**

Die Erfindung bezieht sich auf ein Verfahren zum Bearbeiten von Werkstücken mit einem Laser gemäß dem Oberbegriff des Patentanspruchs 1.

Ein Verfahren dieser Art ist beispielsweise aus der DE—A—1 26 44 014 bekannt. Bei diesem bekannten Verfahren tritt folgendes Problem auf:

Arbeitet man im Bereich geringer Intensität der Laserstrahlung, so wird lediglich die natürliche Absorption des Werkstücks ausgenutzt. Da die hierbei aufgewendete Laserenergie nur zum geringen Teil in Prozeßwärme umgewandelt wird und der größte Teil durch die Wärmeleitung und Reflexion (bei Metallen) bzw. Transmission (bei Nichtleitern) verlorengeht, ergibt sich ein nur geringer Wirkungsgrad.

Es ist bekannt, zur Erhöhung der Absorption, auf das zu bearbeitende Werkstück eine Schicht mit hohem Absorptionsgrad aufzubringen. Von dieser Möglichkeit wird vor allem beim Umwandlungshärten Gebrauch gemacht.

Es ist ferner bekannt, daß der Absorptionsgrad bei Erhöhung der Laserintensität $I_L$ auf bzw. über einen kritischen Grenzwert $I_c$ gegen 1 strebt. Diese Intensitätsabhängigkeit der Absorption, die auch als anomale Absorption bezeichnet wird, ist mit der Ausbildung eines laserinduzierten Plasmas auf der Werkstückoberfläche verbunden. Dieses Plasma wirkt wie ein Energiewandler, der die einfallende Laserenergie bei hohem Wirkungsgrad in Wärmeenergie umwandelt. Im Falle der abtragenden Bearbeitung kann durch Steuerung der Intensität der Laserstrahlung das abzutragende Material in einen solchen Plasmazustand überführt werden, bei dem die kinetische Energie der Teilchen für einen hinreichend schnellen Materialtransport sorgt.

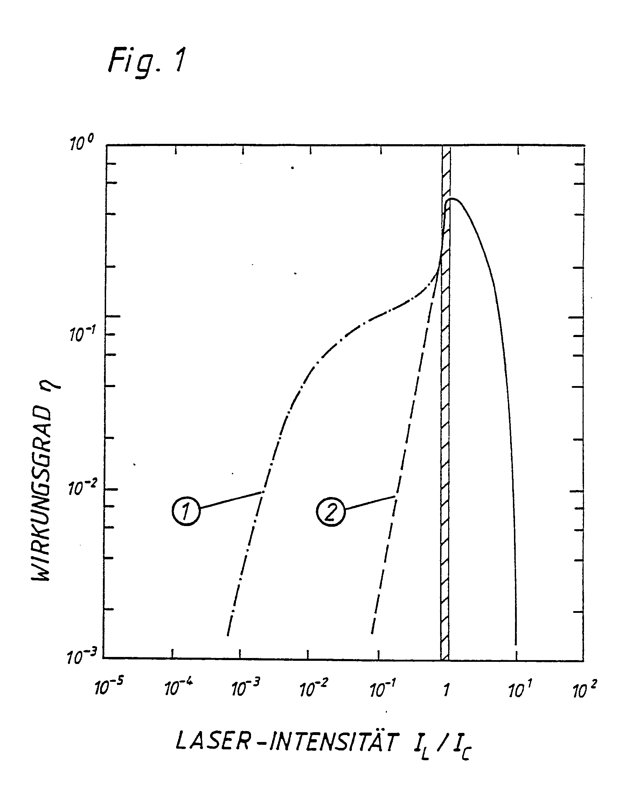

In Fig. 1 ist der Wirkungsgrad η einer abtragenden Bearbeitung in Abhängigkeit von der relativen Laserintensität $I_L/I_c$ bei einer Wellenlänge $\lambda$=10,6 µm dargestellt, und zwar sowohl für rostfreien Stahl (Kurve 1) als auch für Kupfer (Kurve 2). Es zeigt sich, daß im Bereich der kritischen Intensität $I_c$ der Wirkungsgrad η dem Wert 1 nahekommt.

Bei weiterer Erhöhung der Laserintensität setzt durch Aufheizung und Ionisierung des in Richtung der einfallenden Laserstrahlung expandierenden Plasmas eine merkliche Abschirmung des Werkstücks ein. Außerdem nimmt die Linsenwirkung des Plasmas zu, so daß die Bearbeitungsgeometrie gestört wird. Bei Überschreiten eines oberen Grenzwertes der Intensität $I_D$ der Laserstrahlung schirmt das Plasma das Werkstück nahezu vollständig ab, und es entsteht eine laserinduzierte Detonationswelle, wobei der Rückstoß des expandierenden Plasmas zu Kavitation und Zerstörung der Oberfläche des Werkstücks durch Druckbelastung führen kann.

Voraussetzung für die Bildung eines laserinduzierten Plasmas an der Werkstückoberfläche ist das Vorhandensein eines gasförmigen Aggregatzustandes des Werkstückmaterials. Um diese Bedingung zu erfüllen, muß der Laserstrahl das Werkstück zunächst auf oder über die Verdampfungstemperatur aufheizen. Dies bedeutet, daß mehr Laserenergie vom Werkstück absorbiert werden muß, als durch Wärmeleitung abgeführt wird. Aufgrund unterschiedlicher Wärmeleitung und Absorption ergeben sich für die verschiedenen Werkstoffe typische Verdampfungsgrenzintensitäten der Laserstrahlung.

Eine Schwierigkeit bei der Werkstückbearbeitung mittels Laserstrahl im Bereich der anomalen Absorption besteht darin, daß unmittelbar nach Einsetzen des Verdampfungsprozesses die Formation einer laserinduzierten Detonationswelle beginnen kann; dies kann unter anderem bei der Bearbeitung von Aluminium mittels $CO_2$-Laser auftreten.

Eine weitere Schwierigkeit ergibt sich dadurch, daß der Laser durch den Bearbeitungsvorgang in seinen Systemeigenschaften verändert wird. Durch die Anordnung des Werkstücks in der Brennebene des optischen Systems wird ein Bruchteil der Laserstrahlung in den Laserresonator reflektiert. Dieser bildet mit dem Werkstück ein System gekoppelter Resonatoren, deren Eigenschaften und Moden sich deutlich von denen des ursprünglichen Laserresonators unterscheiden. Da die Vorgänge auf dem Werkstück, insbesondere die Eigenschaften eines laserinduzierten Plasmas und die Dynamik der Werkstoffschmelze durch diese optische Rückkopplung die Eigenschaften des Lasers stochastisch beeinflussen, ist eine Intensitätskontrolle zur Vermeidung des Detonationswellenzustandes und damit eine Steuerung der Laserintensität nach dem Wirkungsgrad-Diagramm gemäß Fig. 1 nicht möglich. Auch eine Unterdrückung der Rückkopplung durch wirtschaftlich arbeitende Rückwirkungssperren ist im Hochleistungsbereich derzeit nicht möglich.

Darstellung der Erfindung

Der Erfindung liegt die Aufgabe zugrunde, ein Verfahren zum Bearbeiten von Werkstücken mit einem Laser anzugeben, bei dem eine maximale Absorption der Laserstrahlung im Werkstück bei minimaler Störung durch optische Rückkopplung und Plasmaeffekte erreicht wird.

Eine erfindungsgemäße Lösung dieser Aufgabe ist im Patentanspruch 1 angegeben. Vorteilhafte Weiterbildungen der Erfindung sind in den Unteransprüchen gekennzeichnet.

Das erfindungsgemäße Verfahren hat insbesondere den Vorteil, daß bei der Bearbeitung von Werkstücken mittels eines Lasers eine Anpassung der Laseremission an die jeweilige Dynamik des Barbeitungsvorganges möglich ist. Mit dem erfindungsgemäßen Verfahren lassen sich als weitere Vorteile insbesondere ein Optimum hinsichtlich der Qualität, der Reproduzierbarkeit, der Geschwindigkeit und der Geometrie der Bearbeitung bei maximalen Wirkungsgrad und minimaler Erwärmung des Werkstücks erzielen.

Kurze Beschreibung der Zeichnungen

Nachstehend wird die Erfindung anhand eines Ausführungsbeispiels und von Zeichnungen noch näher erläutert. Es zeigen:

Figur 1 ein Diagramm des Wirkungsgrades $\eta$ einer abtragenden Bearbeitung mittels Laserstrahl in Abhängigkeit von der relativen Laserintensität $I_L/I_c$

Figur 2 ein Prozessdiagramm für die Bearbeitung von Werkstücken mittels Laserstrahl

Figur 3 Streak-Aufnahmen der Grenzintensitäten $I_c$ und $I_D$ des Laserstrahls unter Berücksichtigung der stochastisch geprägten Vorgänge während der Bearbeitung und

Figur 4 eine schematische Darstellung eines Ausführungsbeispiels der erfindungsgemäßen Einrichtung.

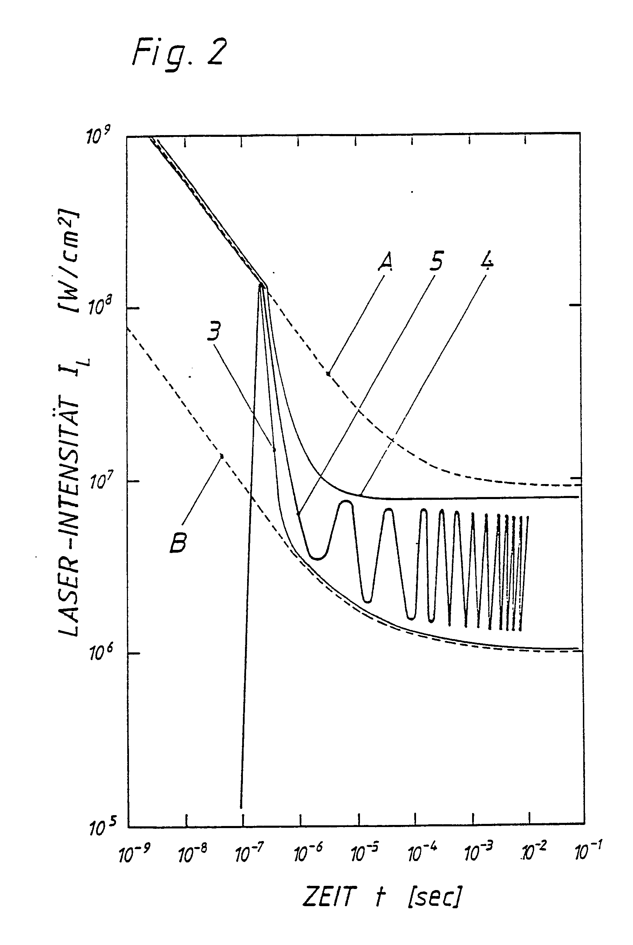

Bester Weg zur Ausführung der Erfindung Die Vorgänge der Plasmaentstehung an der Werkstückoberfläche, insbesondere die zeitliche Entwicklung der für die Absorption der Laserstrahlung wichtigen Paramter Elektronendichte, Elektronenenergie und Stoßfrequenz, können unter idealisierten Bedingungen quantitativ aus Bilanzgleichungen berechnet werden. Ein Prozeßdiagramm, wie es sich aus solchen Rechnungen ergibt, zeigt Fig. 2 für die Bearbeitung von Aluminium mit $CO_2$-Laserstrahlung. Die errechneten Kurven A und B stellen die Grenzintensität $I_c$ für die Formation eines laserinduzierten Plasmas dar, dessen Erzeugung angesrebt wird, um einen Wirkungsgrad der Energiereinkopplung in der Größenordnung von 1 zu erhalten. Dabei liegt der Kurve A der natürliche Absorptionsgrad A nat und der Kurve B die anomale Absorption A$\simeq$1 zugrunde.

Während des Bearbeitungsprozesses erfolgt ein Übergang von Kurve A in Kurve B, wie es durch die Kurve 3 dargestellt ist. Die Kurve 4 zeigt die Grenzintensität $I_D$ zur Formation eines abschirmenden Plasmas, das zur Entstehung laserinduzierter Detonationswellen führt und die Einwirkung der Laserstrahlung auf das Werkstück weitgehend unterbricht. Mit der Kenntnis der zeitlichen Entwicklung der Plasmaeigenschaften ist es unter den erwähnten, idealisierten Bedingungen möglich, für jeden Werkstoff und jedes Bearbeitungsverfahren ein solches Prozeßdiagramm aufzustellen, aus dem die zeitliche Steuerung der Laserintensität für optimale Bearbeitung abgeleitet werden kann. Diese zeitliche Steuerung der Laserintensität ist durch typische Frequenzen der Schmelzbad- und Plasmadynamik charakterisiert. Herkömmliche Bearbeitungsverfahren berücksichtigen nicht das dynamische Verhalten der einkoppelnden und abschirmenden Plasmaprozesse und führen deshalb nicht zu optimalen Bearbeitungsergebnissen. Die Besonderheit der erfindungsgemäßen Laserbearbeitungseinrichtung besteht in der Anpassung der Laseremission an die jeweilige Dynamik des Bearbeitungsvorganges. Die Kurve 5 in Fig. 2 gibt den zeitlichen Verlauf der Laserintensität an, wie er nachfolgend näher beschrieben wird.

Der erste Schritt ist die Erzeugung des Zustandes der erhöhten Absorption oder—gleichbedeutend—des absorbierenden Oberflächenplasmas. Hierzu muß die Laserintensität $I_L$ die Kurve A in Fig. 2 erreichen, wobei der Ausdruck

$$\frac{I_c \cdot dt}{\delta} > \varepsilon_v$$

die kritische Energie für die Erzeugung eines Oberflächenplasmas mit einer Stoßfrequenz $v_c$ in der Größenordnung der Laserfrequenz $v_L$ gemäß der Bedingung $2 \cdot v_c = v_L$ erreicht ($\delta$=charakteristische Eindringtiefe der Temperaturfront; $\varepsilon_v$=für die Verdampfung des Werkstoffs erforderliche Energiedichte).

Sobald das Oberflächenplasma unter den genannten Bedingungen existiert, muß die Laserintensität so schnell abgesenkt werden, daß die Kurve 4 nicht überschritten wird. Würde die Kurve 4 überschritten, so käme es zum Auftreten der Abschirmung des Werkstücks durch eine laserinduzierte Detonationswelle mit allen ihren unerwünschten Auswirkungen.

Das überhitzte Plasma expandiert mit einer unter dem Detonationswert liegenden Geschwindigkeit so lange, bis die Elektronendichte auf einen Wert abgeklungen ist, der für die Laserstrahlung keine störende optische Wirkung mehr zeigt. Die entsprechende Zeitkonstante $t=L_P/v$ ist im wesentlichen durch die Expansionsgeschwindigkeit $v$ des Plasmas und seiner Expansionslänge $L_P \simeq 5 \cdot r_F$ bestimmt ($r_F$=Fokusradius).

Nach der Zeit t ist die Laserintensität wieder zu erhöhen, jedoch nicht über die Kurve 4 hinaus. Die Pulsdauer ist so zu wählen, daß das aufgeheizte Plasmavolumen dV mit der gewünschten kinetischen Energie $p/2\ v^2\ dV$ expandiert. Im folgenden Verlauf liegt die Laserintensität in den Grenzen $I_c \leqq I_L < I_D$ und die Pulszeitkonstante ist auf die Plasmadynamik abgestimmt.

Abhängig vom Bearbeitungsvorgang und dem zu bearbeitenden Material variieren zeitliches Verhalten und Absolutwert der Schwellwerte $I_c$ und $I_D$ (Kurven 3 und 4). Die Ursachen dafür sind die unterschiedlichen Transport- und Dissipationsvorgänge bei dem jeweiligen Bearbeitungsvorgang und unterschiedliche Eigenschaften der Werkstück-Materialien bezüglich Wärmeleitung und Absorption der Laserstrahlung. Dementsprechend ergibt sich für jedes Material und für jeden Bearbeitungsvorgang ein individuelles Prozeßdiagramm.

Das Prozeßdiagramm gemäß Fig. 2 zeigt, daß für eine störungsfreie, reproduzierbare Bearbeitung bei hohem Wirkungsgrad die Laserintensität genau nach den Plasmaeigenschaften gesteuert werden muß. Intensität, Pulsdauer und Pulsabstand können dem Prozeßdiagramm entnommen werden. Darüber hinaus enthält das Prozeßdiagramm noch folgende hier nicht dargestellte Angaben: Werkstoff, Bearbeitungsart, Wellenlänge der Laserstrahlung (z.B. $\lambda$=10,6 µm) und Fokusradius (z.B. $r_F$=100 µm).

In Einzelfällen kann durch Bearbeitung mit einer so ermittelten, festgelegten Steuerung der Laserstrahlung eine Anpassung der Laserparameter an die Werkstückdynamik erfolgen und somit das Bearbeitungsergebnis verbessert werden.

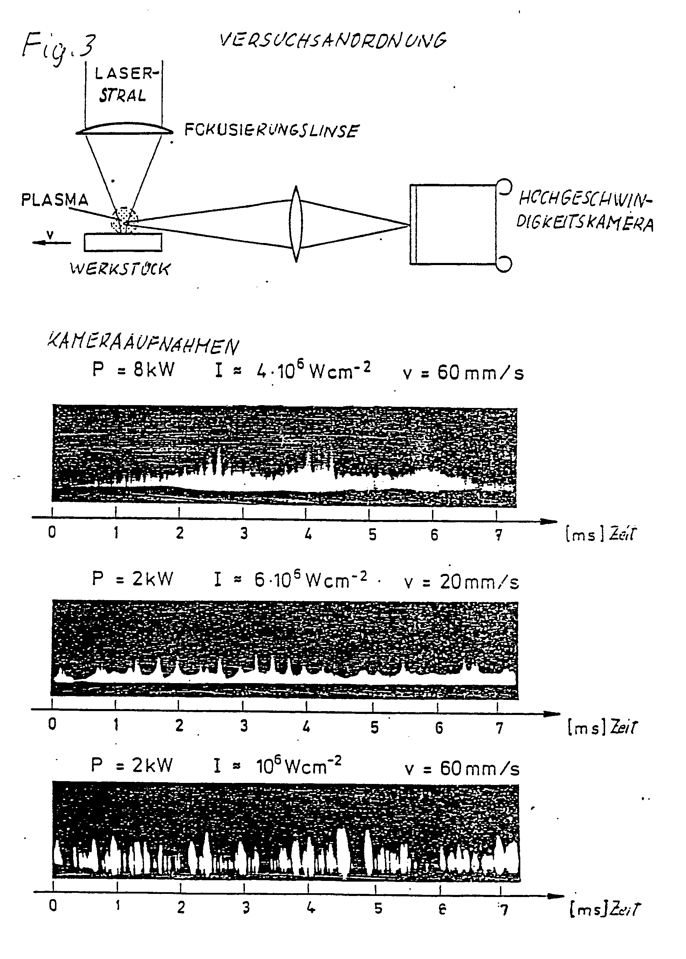

Im allgemeinen ist jedoch die Bearbeitung mit hoher Qualität nach einer solchen festen Prozeßvorschrift nicht möglich. Die Kurven 3 und 4 für die Grenzintensitäten $I_c$ und $I_D$ unterliegen stochastischen Änderungen durch Plasma- und Schmelzdynamik. Als Beispiel ist in Fig. 3 das Schweißen von Stahl mit $CO_2$-Laserstrahlung in Form von Streak-Aufnahmen veranschaulicht. Die Bilder zeigen die Stochastik des Bearbeitungsvorgangs. Außerdem ist, wie ausgeführt, die Laserintensität stochastischen Änderungen durch optische Rückwirkungen unterworfen.

Wegen der stets vorhandenen Inhomogenitäten des Werkstoffs und anderer störender Einflüsse ist es für eine optimale Bearbeitung des Werkstücks nicht ausreichend, die Laserintensität ohne weitere Maßnahmen entsprechend dem Verlauf der Kurve 5 in Fig. 2 zu steuern. Vielmehr ist gemäß der Erfindung während der Bearbeitung des Werkstücks die Laseremission unter fortlaufendem Erfassen und Berücksichtigen der Vorgänge in der Bearbeitungszone des Werkstücks durch entsprechende Modulation der Laserstrahlung derart zu regeln, daß die Laserintensität $I_L$ im Bereich $I_c \leqq I_L < I_D$ gehalten wird. Auf diese Weise kann eine maximale Absorption der Laserstrahlung im Werkstück bei minimaler Störung durch optische Rückkopplung und Plasma sowie eine optimale Reproduzierbarkeit des Bearbeitungsvorganges erzielt werden. Eine Richtung zur Durchführung des erfindungsgemäßen Verfahrens wird weiter unten beschrieben.

Die erfindungsgemäße Einrichtung besitzt in weiterer Ausgestaltung der Erfindung eine Vorrichtung, die folgende Merkmale umfaßt:

— es ist eine Zentraleinheit vorgesehen, die zur Steuerung der Laserstrahlung hinsichtlich Intensität, Leistung, Pulsdauer und Pulsabstand sowie zur Steuerung der Laseroptik entsprechend der gewünschten Geometrie der Bearbeitung dient,

— es ist eine Meßeinrichtung vorgesehen, die zur ständigen Ermittlung des Ist-Wertes der Intensität der Laserstrahlung sowie ihrer örtlichen und zeitlichen Verteilung und zur Übermittlung dieser Meßdaten an die Zentraleinheit dient,

— es ist eine Diagnostikeinrichtung vorgesehen, die zur ständigen Erfassung der Vorgänge in der Bearbeitungszone des Werkstücks und zur Übermittlung der erfaßten Daten an die Zentraleinheit dient,

— die Zentraleinheit ist derart ausgestaltet, daß sie die übermittelten Daten mit den jeweils zugehörigen Sollwerten vergleicht und etwaige Abweichungen durch entsprechende Verstellung von Resonatorjustierung und Versorgungsgerät des Lasers eliminiert.

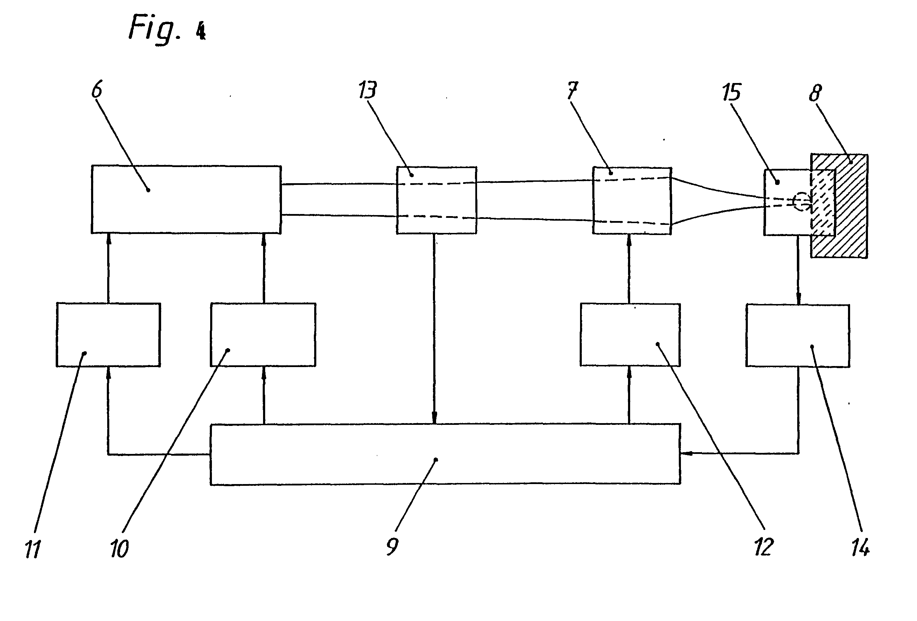

Ein Ausführungsbeispiel der erfindungsgemäßen Einrichtung ist in Fig. 4 schematisch dargestellt und wird im folgenden näher beschrieben:

Mit 6 ist ein Laser bezeichnet, dessen Strahlung mittels einer Optik 7 auf ein Werkstück 8 fokussiert ist. Eine Zentraleinheit 9 steuert über die Resonatorjustierung 10 und das Versorgungsgerät 11 des Lasers 6 die Laserstrahlung hinsichtlich Intensität, Leistung, Pulsdauer und Pulsabstand. Ferner steuert die Zentraleinheit 9 über eine Einstellvorrichtung 12 die Optik 7 entsprechend der gewünschten Geometrie der Bearbeitung. Eine Meßeinrichtung 13 ermittelt ständig den Ist-Wert der Intensität der Laserstrahlung sowie ihre örtliche und zeitliche Verteilung und übermittelt diese Meßdaten der Zentraleinheit 9. Eine Diagnostikeinrichtung 14 erfaßt ständig die Vorgänge in der Bearbeitungszone 15 des Werkstücks 8 und übermittelt die erfaßten Daten ebenfalls der Zentraleinheit 9. Diese Meßdaten charakterisieren den jeweiligen Bearbeitungszustand. Bei Annäherung der Laserintensität an die Grenzintensitäten $I_c$ oder $I_D$ über- bzw. unterschreiten diese Meßwerte vorgegebene Schwellwerte.

In der Zentraleinheit 9 werden die Meßwerte mit den vorgegebenen Schwellwerten verglichen. Bei Über- bzw. Unterschreiten der Schwellwerte des Meßsignals werden die Laserparameter derart geändert, daß der Meßwert wieder zwischen den vorgegebenen Schwellwerten liegt. Damit ist gewährleistet, daß die Laserintensität den Bereich zwischen den Grenzintensitäten $I_c$ und $I_D$ nicht verläßt.

Zur Erfassung der Meßdaten können eine Vielzahl von Diagnostikmethoden verwendet werden. Für jede Methode sind die oben erwähnten Schwellwerte des Meßsignals zuvor zu ermitteln. Dies erfolgt zum Beispiel durch Eichung an definiert präparierten Bearbeitungszuständen oder durch Qualitätskontrolle des Bearbeitungsergebnisses.

Unter anderen können hierfür folgende Meßmethoden angewendet werden:

a) Messung der Intensität der Plasmaleuchtdichte in einem vorgegebenen Abstand vom Werkstück,

b) spektral aufgelöste Messung des Plasmaleuchtens,

c) Messung der Farbtemperatur oder der Gesamtleuchtdichte des Plasmas,

d) Messung der Lichtstreuung am Plasma,

e) Messung der Detonationsgeschwindigkeit des Plasmas,

f) Messung von Frequenzverschiebungen, die durch die Bewegung der Detonationsfront des Plasma verursacht werden,

g) Messung des durch die Plasma-Detonationswelle entstehenden akustischen Signals,

h) Messung des Absorptionszustandes des Werkstücks etwa durch Messung der vom Werkstück reflektierten Strahlungsintensität.

Gewerbliche Verwertbarkeit

Gemäß einer Weiterbildung der Erfindung wird als Laser 6 wegen seiner guten Modulationseigenschaften ein mit Hochfrequenz angeregter Gaslaser, vorzugsweise ein $CO_2$-Laser verwendet. Eine Übertragung auf andere Lasertypen (Festkörperlaser) ist möglich).

Die erfindungsgemäße Einrichtung zum Bearbeiten von Werkstücken mittels Laserstrahl dient beispielsweise der abtragenden Bearbeitung von Stahl oder Kupfer oder auch dem Schweißen metallischer Werkstoffe. Zur Bearbeitung kann jeder geeignete Werkstoff dienen. Die genannten Bearbeitungsarten sind nur beispielhaft angeführt und können jederzeit auf andere Bearbeitungsarten ausgedehnt werden.

## Patentansprüche

1. Verfahren zum Bearbeiten von Werkstücken (8) mit einem Laser (6), dessen Laserstrahl auf das zu bearbeitende Werkstück (8) gerichtet ist, und den eine Zentraleinheit (9) steuert, die eine Diagnostikeinheit (14) für den Ist-Wert der Laserstrahlung und die Wirkung des Laserstrahls aufweist, dadurch gekennzeichnet, daß der Absorptionszustand des Werkstücks (8) von der Diagnostikeinheit (14) erfaßt wird, und daß in Abhängigkeit von dem erfaßten Absorptionszustand die Intensität $I_L$ des Laserstrahls im Bereich

$$I_c \leq I_L < I_D$$

gesteuert wird, wobei

$I_c$ der Intensitätswert des Laserstrahls ist, bei dem der Absorptionsgrad für die Laserstrahlung gegen 1 strebt, und

$I_D$ der Intensitätswert des Laserstrahls ist, bei dem eine Laser-induzierte Detonationswelle auftritt.

2. Verfahren nach Anspruch 1, dadurch gekennzeichnet, daß die Intensität $I_L$ des Laserstrahls mit zeitlich konstanter Pulsform und zeitlich konstantem Pulsabstand moduliert wird, und daß die Spitzenintensität der Laserstrahlung und die Zeitkonstanten der Modulation an die Frequenzen der Vorgänge in der Bearbeitungszone des Werkstücks angepaßt werden.

3. Verfahren nach Anspruch 2, dadurch gekennzeichnet, daß die Intensität $I_L$ des Laserstrahls zunächst auf einen Wert $I_c$ gesteuert wird, bei dem das Produkt

$$\frac{I_c \cdot dt}{\delta}$$

($\delta$ ist die charakteristische Eindringtiefe der Temperaturfront) die kritische Energie für die Erzeugung eines Oberflächenplasmas mit der Stoßfrequenz $v_c$ gemäß der Bedingung $2v_c = \Omega_L$ erreicht, und daß anschließend die Intensität des Laserstrahls $I_L$ zwischen den Grenzwerten $I_c$ und $I_D$ variiert wird, wobei der Pulsabstand so gewählt ist, daß die optische Wirkung des Plasmas infolge seiner Expansion jeweils abgeklungen ist, und daß die Pulsdauer so gewählt ist, daß keine vollständige Absorption der Laserstrahlung im Plasma entstehen kann.

4. Verfahren nach einem der Ansprüche 1 bis 3, dadurch gekennzeichnet, daß zur Erfassung des Absorptionszustandes des Werkstücks die vom Werkstück reflektierte Strahlung gemessen wird.

5. Verfahren nach einem der Ansprüche 1 bis 4, dadurch gekennzeichnet, daß zur Erfassung der Annäherung der Intensität $I_L$ des Laserstrahls an den oberen Grenzwert $I_D$ die Intensität der Plasmaleuchtdichte in einem vorgegebenen Abstand vom Werkstück gemessen wird.

6. Verfahren nach einem der Ansprüche 1 bis 5, dadurch gekennzeichnet, daß zur Erfassung der Annäherung der Intensität $I_L$ des Laserstrahls an den oberen Grenzwert $I_D$ das Plasmaleuchten spektral aufgelöst gemessen wird.

7. Verfahren nach einem der Ansprüche 1 bis 6, dadurch gekennzeichnet, daß zur Erfassung der Annäherung der Intensität $I_L$ des Laserstrahls an den oberen Grenzwert $I_D$ die Farbtemperatur oder die Gesamtleuchtdichte des Plasmas gemessen wird.

8. Verfahren nach einem der Ansprüche 1 bis 7, dadurch gekennzeichnet, daß zur Erfassung der Annäherung der Intensität $I_L$ des Laserstrahls an den oberen Grenzwert $I_D$ die Lichtstreuung am Plasma gemessen wird.

9. Verfahren nach einem der Ansprüche 1 bis 8, dadurch gekennzeichnet, daß zur Erfassung der Annäherung der Intensität $I_L$ des Laserstrahls an den oberen Grenzwert $I_D$ die Detonationsgeschwindigkeit des Plasmas gemessen wird.

10. Verfahren nach einem der Ansprüche 1 bis 9, dadurch gekennzeichnet, daß zur Erfassung der Annäherung der Intensität $I_L$ des Laserstrahls an den oberen Grenzwert $I_D$ die Frequenzverschiebung, die durch die Bewegung der Detonationsfront des Plasmas verursacht wird, gemessen wird.

11. Verfahren nach einem der Ansprüche 1 bis 10, dadurch gekennzeichnet, daß zur Erfassung der Annäherung der Intensität $I_L$ des Laserstrahls an den oberen Grenzwert $I_D$ das durch die Plasma-Detonationswelle erzeugte akustische Signal gemessen wird.

12. Verfahren nach einem der Ansprüche 1 bis 11, dadurch gekennzeichnet, daß als Laser ein mit Hochfrequenz angeregter Gaslaser, vorzugsweise ein $CO_2$-Laser verwendet wird.

## Revendications

1. Procédé d'usinage de pièces (8) au moyen d'un laser (6) dont le rayon laser est dirigé à la pièce (8) à usiner et qui est réglé par une unité centrale (9) comprenante un dispositif d'observation diagnostique (14) pour la détection de la valeur réelle du rayonnement laser et de l'effet produit par le rayon laser, caractérisé en ce que l'état d'absorption de la pièce (8) est détecté par ladite unité d'observation (14), et en ce qu'en fonction de l'état d'absorption détecté, l'intensité $I_L$ du rayon laser est réglé au dedans d'un régime défini par la relation

$$I_c \leq I_L < I_D$$

dans laquelle

$I_c$ définit la valeur de l'intensité du rayon laser, à laquelle le facteur d'absorption du rayonnement laser présente une tendence vers 1, et

$I_D$ correspond à la valeur d'intensité du rayon laser, à laquelle il y a l'occurrence d'une onde de détonation induite par laser.

2. Procédé selon la revendication 1, caractérisé en ce que l'intensité $I_L$ du rayon laser est modulée par une forme d'impulsion constante dans le temps et par un intervalle d'impulsions à constance temporelle, et en ce que la crête d'intensité du rayonnement laser et les constantes de temps de la modulation sont accordées aux processus dans la zone d'usinage de la pièce.

3. Procédé selon la revendication 2, caractérisé en ce qu'au début l'intensité $I_L$ du rayon laser est réglée à une valeur $I_c$ à laquelle le produit

$$\frac{I_c \cdot dt}{\delta}$$

($\delta$ étant l'enfoncement caractéristique du front de température) atteint le niveau d'énergie critique pour la génération d'un plasma superficiel à une fréquence des chocs $v_c$ selon la condition $2v_c=\Omega_L$, et en ce que ci-après l'intensité du rayon laser $I_L$ est variée entre les valeurs limites $I_c$ et $I_D$, l'intervalle d'impulsions étant si choisi que l'effet optique du plasma en vertu de sa dilatation soit amorti, et en ce que la durée d'impulsion est si choisi que l'absorption totale du rayonnement laser dans le plasma soit empêchée.

4. Procédé selon quelconque des revendications 1 à 3, caractérisé en ce que le rayonnement réfléchi par la pièce à usiner est mesuré afin de détecter l'état en absorption de la pièce.

5. Procédé selon quelconque des revendications 1 à 4, caractérisé en ce l'intensité de la luminance du plasma est mesurée à une distance définie de la pièce afin de détecter l'approche de l'intensité $I_L$ du rayon laser à la limite supérieure $I_D$.

6. Procédé selon quelconque des revendications 1 à 5, caractérisé en ce que la luminance du plasma est mesuré à résolution spectrale afin de détecter l'approche de l'intensité $I_L$ du rayon laser à la limite supérieure $I_D$.

7. Procédé selon quelconque des revendications 1 à 6, caractérisé en ce que la température de couleur ou la luminance totale du plasma est mesurée afin de détecter l'approche de l'intensité $I_L$ du rayon laser à la limite supérieure $I_D$.

8. Procédé selon quelconque des revendications 1 à 7, caractérisé en ce que la diffusion de la lumière au plasma est mesurée afin de détecter l'approche de l'intensité $I_L$ du rayon laser à la limite supérieure $I_L$.

9. Procédé selon quelconque des revendications 1 à 8, caractérisé en ce que la vitesse de détonation du plasma est mesurée afin de détecter l'approche de l'intensité $I_L$ du rayon laser à la limite supérieure $I_D$.

10. Procédé selon quelconque des revendications 1 à 9, caractérisé en ce que le décalage de fréquence entraîné par le mouvement du front de détonation du plasma est mesuré afin de détecter l'approche de l'intensité $I_L$ du rayon laser à la limite supérieure $I_D$.

11. Procédé selon quelconque des revendications 1 à 10, caractérisé en ce que le signal acoustique généré par l'onde de détonation du plasma est mesuré afin de détecter l'approche de l'intensité $I_L$ du rayon laser à la limite supérieure $I_D$.

12. Procédé selon quelconque des revendications 1 à 11, caractérisé en ce qu'un laser à gaz, de préférence à $CO_2$, excité par haute fréquence, est utilisé en tant que laser.

**Claims**

1. Method of machining workpieces (8) by means of a laser unit (6) whose laser beam is directed onto the workpiece (8) to be machined and which is controlled by a central processing unit (9) including a diagnostic unit (14) to detect the actual value of the laser radiation as well as the effects of the laser beam, characterized in that the state of absorption of said workpiece (8) is detected by said diagnostic unit (14), and that, as a function of the detected state of absorption, the intensity $I_L$ of the laser beam is controlled within the range

$$I_c \leq I_L < I_D$$

wherein

$I_c$ indicates the numerical intensity of the laser beam at which the absorption factor of the laser radiation tends to approach the value of 1, and

$I_D$ reflects the numerical intensity of the laser beam at which a laser-induced detonation wave occurs.

2. Method according to Claim 1, characterized in that the intensity $I_L$ of said laser beam is modulated with a pulse shape constant in time and a pulse gap constant in time, and that the peak intensity of the laser radiation as well as the time constants of modulation are matched with the frequencies of the processes taking place in the workpiece machining zone.

3. Method according to Claim 2, characterized in that the intensity $I_L$ of the laser beam is initially controlled to assume a value $I_c$ at which the product

$$\frac{I_c \cdot dt}{\delta}$$

($\delta$ corresponding to the characteristic depth of penetration of the temperature front) reaches the critical energy level for the formation of a surface plasma at the shock frequency $v_c$ in compliance with the condition $2v_c=\Omega_L$, and that subsequently the intensity of the laser beam $I_L$ is varied within the range between the limits $I_c$ and $I_D$, with the pulse gap being so selected that the optical effects of the plasma as a result of the latter's expansion will have decayed, and with the pulse width being so selected that a complete absorption of the laser radiation in the plasma will be prevented.

4. Method according to any of Claims 1 to 3, characterized in that the radiation reflected by the workpiece is measured so as to detect the state of absorption of the workpiece.

5. Method according to any of Claims 1 to 4, characterized in that the intensity of the plasma luminance is measured at a predetermined spacing from the workpiece so as to detect the intensity $I_L$ of the laser beam approaching the upper limit $I_D$.

6. Method according to any of Claims 1 to 5, characterized in that the plasma luminance is measured by spectral resolution so as to detect the intensity $I_L$ of the laser beam approaching the upper limit $I_D$.

7. Method according to any of Claims 1 to 6, characterized in that the colour temperature or the total luminance of the plasma is measured so as to detect the intensity $I_L$ of the laser beam approaching the upper limit $I_D$.

8. Method according to any of Claims 1 to 7, characterized in that the light diffraction at the plasma is measured so as to detect the intensity $I_L$ of the laser beam approaching the upper limit $I_D$.

9. Method according to any of Claims 1 to 8, characterized in that the rate of detonation of the plasma is measured so as to detect the intensity $I_L$ of the laser beam approaching the upper limit $I_D$.

10. Method according to any of Claims 1 to 9, characterized in that the frequency shift caused by the displacement of the plasma detonation front is measured so as to detect the intensity $I_L$ of the laser beam approaching the upper limit $I_D$.

11. Method according to any of Claims 1 to 9, characterized in that the acoustic signal generated by the plasma detonation wave is measured so as to detect the intensity $I_L$ of the laser beam approaching the upper limit $I_D$.

12. Method according to any of Claims 1 to 11, characterized in that a gas laser, preferably of the $CO_2$ type, excited at high frequency, is used as the laser unit.

Fig. 1

Fig. 2

Fig. 3

VERSUCHSANORDNUNG

KAMERAAUFNAHMEN

$P = 8kW$     $I \approx 4 \cdot 10^6 W cm^{-2}$     $v = 60 mm/s$

$P = 2kW$     $I \approx 6 \cdot 10^6 W cm^{-2}$     $v = 20 mm/s$

$P = 2kW$     $I \approx 10^6 W cm^{-2}$     $v = 60 mm/s$

Fig. 4